# EUROPÄISCHE PATENTANMELDUNG

(11) **EP 3 522 188 A1**
(43) Veröffentlichungstag der Anmeldung: **07.08.2019**
(21) Anmeldenummer: 18155370.2
(22) Anmeldetag: 06.02.2018
(51) Int. Cl.: H01G 4/38, H01G 4/40, H01G 2/10

(54) **KONDENSATORAUFBAU UND LEISTUNGSMODUL MIT EINEM LEISTUNGSELEKTRONISCHEN BAUELEMENT**

(71) Anmelder: Siemens Aktiengesellschaft, 80333 München (DE)
(72) Erfinder: Die Erfindernennung liegt noch nicht vor

(57) **Zusammenfassung**

Die Erfindung betrifft einen Kondensatoraufbau (14) mit mehreren in einer Haltestruktur (18, 19) untergebrachten Kondensatoren. Diese werden über eine erste Kondensatorelektrode (18) und eine zweite Kondensatorelektrode (19) parallel geschaltet und können mit Anschlussstrukturen (20) durch Oberflächenmontage auf einer Oberfläche (13) eines Schaltungsträgers (12) montiert werden. Der Schaltungsträger (12) besteht vorzugsweise aus einer Keramik und kann auf der dem Kondensatoraufbau (14) abgewandten Seite leistungselektronische Bauelemente aufweisen. Hierdurch entsteht ein Leistungsmodul (11), welches ebenfalls unter Schutz gestellt ist. Vorzugsweise sind die Kondensatoren (15) in einer leistungselektronischen Schaltung mit den leistungselektronischen Bauelementen kontaktiert, wobei durch die erste Elektrode (18) und die zweite Elektrode (19) eine verlustarme Stromübertragung möglich ist. Die Leistungsmodule (11) miteinander kombiniert werden und ermöglichen vorteilhaft eine kostengünstige Skalierung leistungselektronischer Schaltungen für unterschiedliche Anwendungen, wodurch vorteilhaft der Fertigungs- und Montageaufwand minimiert werden kann.

## Beschreibung

Die Erfindung betrifft einen Kondensatoraufbau mit mehreren in einer Haltestruktur angeordneten Kondensatoren, wobei die Kondensatoren je eine erste Kondensatorelektrode und eine zweite Kondensatorelektrode aufweisen. Die Haltestruktur ihrerseits weist eine erste Elektrode und eine zweite Elektrode auf. Die Kondensatoren sind über ihre ersten Kondensatorelektroden mit der ersten Elektrode und über ihre zweiten Kondensatorelektroden mit der zweiten Elektrode elektrisch kontaktiert. Außerdem weist die Haltestruktur eine Montageseite für eine Oberflächenmontage auf. Die Montageseite ist mit einer ersten Anschlussfläche der ersten Elektrode und mit einer zweiten Anschlussfläche der zweiten Elektrode ausgestattet, so dass eine elektrische Kontaktierung der Haltestruktur durch eine Oberflächenmontage möglich ist. Der Kondensatoraufbau bildet damit eine oberflächenmontierbare Baugruppe, die zur Montage und elektrischen Kontaktierung auf ein Substrat wie beispielsweise eine organische und anorganische Substrate wie zum Beispiel Leiterplatten aufgesetzt werden kann. Oberflächenmontierbare Bauelemente, auch SMD (Service Mounted Devicees) genannt, sind in der Elektronikmontage weit verbreitet, da sich diese einfach verarbeiten lassen.

Außerdem betrifft die Erfindung ein Leistungsmodul mit einem leistungselektronischen Bauelement, welches auf einer Substratplatte montiert ist. Die Substratplatte mit dem montierten Leistungsmodul bildet vorzugsweise ein Package, welches seinerseits auf einem weiteren Schaltungsträger als Substrat montiert werden kann. Leistungselektronische Bauelemente werden häufig in Kombination mit Kondensatoren eingesetzt. Hierdurch werden leistungselektronische Schaltungen realisiert.

Leistungselektronische Schaltungen sind üblicherweise auf einen zugehörigen gegebenen Anwendungsfall anzupassen. Diese Anwendungsfälle unterscheiden sich individuell, wodurch bei der Auslegung der leistungselektronischen Schaltungen und bei deren Herstellung ein beträchtlicher Aufwand entsteht. Die individuellen Anwendungsfälle stehen insbesondere einer Automatisierbarkeit der Herstellung von Leistungsmodulen im Wege. Insbesondere erzeugt die Verwendung von Kondensatoren einen erhöhten Montageaufwand, da erforderliche Kapazitätswerte nur durch eine Parallelschaltung mehrerer Kondensatoren erreicht werden können, wobei diese alle in die leistungselektronische Schaltung integriert werden müssen.

Die Aufgabe der Erfindung besteht darin, einen Kondensator aufbau und/oder ein Leistungsmodul fortzubilden, wobei sich mit dem Kondensatoraufbau bzw. mit dem Leistungsmodul leistungselektronische Schaltungen mit einem verringerten Aufwand bei der Konzeption bzw. bei der Herstellung erzeugen lassen sollen, insbesondere bei Einzelanfertigungen von Leistungsmodulen bzw. geringen Stückzahlen.

Diese Aufgabe wird mit dem eingangs angegebenen Kondensatoraufbau erfindungsgemäß dadurch gelöst, dass die Haltestruktur einen quaderförmigen Innenraum einschließt, in dem die Kondensatoren angeordnet sind. Außerdem ist an einer außerhalb der Montageseite liegenden Außenseite der Haltestruktur eine zusätzliche Baustruktur vorgesehen.

Die Haltestruktur ermöglicht vorteilhaft eine Anordnung der Kondensatoren in der Haltestruktur bei gleichzeitig geringem Fertigungsaufwand. Die Kondensatoren können beispielsweise mit den Elektroden verlötet oder anderweitig kontaktiert werden, sodass eine Baueinheit entsteht und die Elektroden die Kondensatoren zusammenhalten. Es entsteht vorteilhaft eine hohe Packungsdichte der Kondensatoren, so dass der Kondensatoraufbau kompakt ist und als oberflächenmontierbares Bauelement vorteilhaft ohne großen Aufwand gehandhabt werden kann. Weitere Vorteile ergeben sich daraus, dass mit der erfindungsgemäßen Anordnung ein niederinduktiver Aufbau einer leistungselektronischen Schaltung möglich ist. Der Kondensatoraufbau kann vorteilhaft in hoher Stückzahl gefertigt werden und lässt sich dann in leistungselektronischen Schaltungen verwenden. Auch können die Kondensatoren klassiert werden (Binning), bevor diese zu dem Kondensatoraufbau zusammengeführt werden. Der Kondensatoraufbau kann vor einer weiteren Verwendung vermessen werden, um dessen Eignung für die Leistung elektronische Schaltung zu bestimmen. Anschließend kann der Kondenatoraufbau durch eine Oberflächenmontage vorteilhaft mit geringem Fertigungsaufwand bestückt werden.

Die erste Elektrode und die zweite Elektrode bilden gemäß einer vorteilhaften Ausgestaltung der Erfindung Seitenwände des Innenraums der Haltestruktur. Die Seitenwände erstrecken sich jeweils senkrecht von der ersten Anschlussfläche bzw. von der zweiten Anschlussfläche weg. Hierdurch können vorteilhaft die Kondensatoren zwischen den Seitenwänden angeordnet sein. Die Kondensatoren, die in dem Innenraum montiert werden, weisen dabei die Kondensatorelektroden an gegenüberliegenden Seiten auf und sind vorzugsweise selbst quaderförmig ausgebildet. Hierdurch entsteht vorteilhaft eine enge Packung im Innenraum der Haltestruktur mit einer optimalen Raumausnutzung. Die Kontaktierung über die Seitenwände ermöglicht zusätzlich vorteilhaft eine Parallelschaltung der Kondensatoren bei gleichzeitig kurzen Kontaktwegen, wodurch sich bezogen auf den Bauraum große Leiterquerschnitte bei gleichzeitig kurzen Leiterlängen verwirklichen lassen. Hierdurch kann vorteilhaft die parasitäre Induktivität des Kondensatoraufbaus so klein wie möglich gehalten werden.

Die Kondensatoren können in der Haltestruktur vorteilhaft in mehreren Etagen übereinander angeordnet werden. Gleichzeitig ist eine Anordnung nebeneinander möglich, wobei der in der leistungselektronischen Schaltung zur Verfügung stehende Bauraum optimal genutzt wird. Über die Seitenwände und die sich daran anschließenden Anschlussflächen erfolgt eine Kontaktierung der parallel geschalteten Kondensatoren mit dem Substrat, auf dem beispielsweise eine leistungselektronische Schaltung realisiert sein kann, von der der Kondensatoraufbau einen Teil bildet.

Außer der Montageseite bildet die Haltestruktur erfindungsgemäß auch mindestens eine Außenseite aus. Durch den quaderförmigen Innenraum, der von der Haltestruktur zumindest teilweise umgeben ist, können bis zu fünf Außenseiten ausgebildet werden. Diese können bezogen auf die Montageseite aus den Seitenflächen (gebildet durch die Seitenwände) und einer der Montageseite gegenüber liegenden Deckfläche bestehen, die die Oberseite des Kondensatoraufbaus bildet. Selbstverständlich kann der Kondensatoraufbau in jeder Einbaulage verwendet werden. Die Begrifflichkeiten Seitenfläche, Seitenwände, Deckfläche und Oberseite, sind relativ zur Montageseite zu sehen, die bezogen auf das Substrat während der Montage die Unterseite des Bauelements bildet.

Durch Vorsehen einer zusätzlichen Baustruktur können vorteilhaft zusätzliche Funktionalitäten für den Kondensatoraufbau realisiert werden. Diese Funktionalitäten vereinfachen ein Herstellen einer leistungselektronischen Schaltung aus vorgefertigten Modulen, weil hierdurch der Fertigungsaufwand eingespart werden kann, der durch eine gesonderte Realisierung dieser Funktionalitäten in der leistungselektronischen Schaltung entstünde. Dies wird im Folgenden noch näher erläutert.

Bei der zusätzlichen Baustruktur kann es sich um Bauteile oder Funktionskomponenten handeln, die gesondert an der Haltestruktur montiert werden. Eine andere Möglichkeit besteht darin, die Baustruktur beispielsweise als integralen Bestandteil der Haltestruktur auszubilden. Dies ist beispielsweise möglich, wenn die Baustruktur gemäß einer besonderen Ausgestaltung der Erfindung als Versteifungsstruktur, insbesondere als Rippen, ausgebildet ist. Hierdurch kann vorteilhaft der Kondensatoraufbau stabilisiert werden, so dass bei der Montage beispielsweise eine Anbindung an externe Versteifungsstrukturen entfallen kann. Dies verringert den anfallenden Montageaufwand.

Gemäß einer weiteren Ausgestaltung der Erfindung kann vorgesehen werden, dass die Baustruktur elektrische Leitpfade aufweist, die von der Montageseite zu einer Oberseite des Kondensatoraufbaus verlaufen. Diese elektrischen Leitpfade ermöglichen vorteilhaft eine Kontaktierung von zusätzlichen elektrischen oder elektronischen Funktionskomponenten, die auf der Oberseite der Baustruktur montiert sind. Diese können dann mit einer leistungselektronischen Schaltung auf dem Substrat, welches über die Montageseite mit dem Kondensatoraufbau verbunden ist, kontaktiert werden.

Hierdurch gelingt es, zusätzlich elektronische Funktionalitäten in den Kondenatoraufbau zu integrieren, welche bei der Herstellung von standardisierten Kondensatoraufbauten in großer Stückzahl vorteilhaft kostengünstig hergestellt werden können. Ein Montageaufwand bei der Auslegung beispielsweise von leistungselektronischen Schaltungen wird dadurch vorteilhaft verringert, da die elektronische Funktionalität nicht während der Herstellung der leistungselektronischen Schaltung gesondert montiert werden muss.

Um die Leitpfade für eine elektronische Funktionalität nutzen zu können, kann die Baustruktur vorteilhaft einen Schaltungsträger aufweisen. Dieser kann beispielsweise aus einem organischen und/oder anorganischen Substrat (z. b. einer Leiterplatte) bestehen, die in geeigneter Weise strukturiert ist. Diese stellt dann die Verbindung zwischen den Leitpfaden und einer elektronischen Schaltung her. Vorteilhaft kann hier auf eine bewährte Technologie zurückgegriffen werden, was den Fertigungsaufwand minimiert und die Zuverlässigkeit maximiert.

Auf dem Schaltungsträger kann gemäß einer besonderen Ausgestaltung der Erfindung eine Treiberschaltung für mindestens ein leistungselektronisches Bauelement ausgebildet sein. Auf diese Weise entsteht vorteilhaft ein Leistungsmodul, welches mit weiteren Leistungsmodulen zu einer leistungselektronischen Schaltung kombiniert werden kann.

Gemäß einer anderen Ausgestaltung der Erfindung kann die Baustruktur auch aus einer Kühlstruktur bestehen. Diese wird thermisch leitend an die zu kühlende Struktur angefügt, so dass vorteilhaft kurze Leitungswege für die erzeugte Wärme entstehen. Dadurch kann die Kühlstruktur vorteilhaft mit einer verbesserten Effizienz betrieben werden, wodurch Bauraum gespart werden kann. Außerdem verringern die vormontierten Kühler bei der Verwendung des Kondensatoraufbaus in einer leistungelektronischen Schaltung den Montageaufwand.

Vorteilhaft kann vorgesehen werden, dass die Baustruktur mindestens ein Sensorelement, insbesondere einen Temperatursensor und/oder einen Feuchtigkeitssensor und/oder einen Stromsensor und/oder einen Beschleunigungssensor und/oder einen Gassensor aufweist. Die Sensorsignale können vorteilhaft dazu genutzt werden, den Betriebszustand und/oder betriebsbedingte Veränderungen des Kondensatoraufbaus (Alterung, Beschädigung healthmonitoring, d. h. Eigenszustandsbeobachtung) ermitteln, um hieraus Informationen über den Betriebszustand des Kondensatoraufbaus zu gewinnen. Möglich sind Aussagen über eine Restlebensdauer oder ein bevorstehendes Versagen oder eine Überlastung des Kondensatoraufbaus oder Leistungsmoduls. Die Sensorsignale können mit einer Auswerteschaltung verarbeitet werden, um zu den genannten Aussagen zu gelangen.

Temperatursensoren kommen beispielsweise zum Einsatz, damit die Betriebstemperatur der Leistungsmodule überwacht werden kann. Dies ermöglicht beispielsweise ein rechtzeitiges Abschalten, um eine Überlastung oder Beschädigung des Leistungsmoduls zu verhindern. Ein Temperatursensor kann aber auch zum Einsatz kommen, um die Umgebungstemperatur der leistungselektronischen Schaltung zu bestimmen, und beispielsweise das voraussichtliche Kühlungsverhalten zu bestimmen. Feuchtigkeitssensoren können verwendet werden, um die Betriebsbedingungen für die leistungselektronische Schaltung zu überwachen. Bei einer zu hohen Feuchtigkeit muss die leistungselektronische Schaltung getrocknet werden, bevor ein Betrieb oder Weiterbetrieb möglich ist. Eine zu hohe Feuchtigkeit kann beispielsweise bei niedrigen Außentemperaturen durch die Bildung von Tau entstehen. Eine andere Möglichkeit besteht darin, dass eine Wasserkühlung undicht geworden ist.

Stromsensoren kommen zum Einsatz, um den Betriebszustand der leistungselektronischen Schaltung zu überwachen. Beispielsweise kann die Strombelastung in den einzelnen Leistungsmodulen miteinander verglichen werden. Eine Strommessung kann beispielsweise auch für einen Betrieb einer Treiberschaltung für die Leistungsmodule erforderlich sein (hierzu im Folgenden noch mehr).

Das Sensorelement kann vorteilhaft auch als Beschleunigungssensor ausgebildet sein. Beschleunigungssensoren ermöglichen vorteilhaft die Ermittlung von mechanischen Beanspruchungen der leistungselektronischen Schaltung. Beispielsweise können Ereignisse aufgezeichnet werden, welche einen Weiterbetrieb der leistungselektronischen Schaltung ausschließen, bevor eine Wartung vorgenommen wurde, beispielsweise weil die leistungselektronische Schaltung bei einem mobilen Einsatz heruntergefallen ist. Beschleunigungssensoren können aber auch verwendet werden, um beispielsweise Vibrationen zu ermitteln. Abhängig von Häufigkeit und Stärke der Vibration können z. B. flexible Wartungsintervalle für die leistungselektronische Schaltung ausgegeben werden.

Weiterhin kann vorteilhaft die Baustruktur eine elektrische Schirmstruktur aufweisen, die den Kondensatoraufbau zumindest teilweise ummantelt. Hierdurch ist es vorteilhaft möglich, elektrische Schaltungen vor störenden Einflüssen zu schützen. Zuletzt kann der Innenraum der Haltestruktur vorteilhaft gekapselt sein. Zur Kapselung können anorganische und organische Vergussmassen z.B. aus Silikon oder Gießharzen verwendet werden, wobei diese selbst elektrisch isolierend sind. Eine Kapselung mittels eines geeigneten Kapselmaterials hat den Vorteil, dass der Kondensatoraufbau besser vor Umwelteinflüssen (Staub, Feuchtigkeit) geschützt werden kann.

Eine besonders bevorzugte Ausführungsform der Erfindung wird erhalten, wenn die Haltestruktur ein elektrisch isolierendes Material aufweist (insbesondere Kunststoff), in das die erste Elektrode und die zweite Elektrode integriert sind. Das Integrieren dieser Elektroden kann auf verschiedene Arten erfolgen. Beispielsweise können die erste Elektrode und die zweite Elektrode durch das isolierende Material umspritzt werden. Hierzu eignet sich vorzugsweise ein thermoplastischer Kunststoff oder ein anderer Funktionskunststoff. Dabei bleiben die für die Kondensatoren vorgesehenen elektrischen Kontaktflächen sowie die Anschlussflächen für die Oberflächenmontage frei, damit eine elektrische Verbindung zwischen den besagten Bauelementen hergestellt werden kann (vorzugsweise durch eine Lötverbindung und/oder durch eine Sinterverbindung und/oder durch Leitklebeverbindung und/oder durch Metallsprühen). Eine andere Möglichkeit besteht darin, ein Gehäuse aus dem Material einzeln herzustellen (beispielsweise durch Spritzgießen), wobei dieses Aufnahmen für die Elektrode aufweist. Diese können dann beispielsweise eingeklebt oder eingelegt oder eingeclipt werden.

Das elektrisch isolierende Material verbessert vorteilhaft die Handhabung des Kondensatoraufbaus, da dieser bereits vor der Montage der Kondensatoren einen selbsttragenden Aufbau ausbilden kann. Außerdem bewirkt das elektrisch isolierende Material, dass die elektrische Isolation des Kondensatoraufbaus zu seiner Umgebung verbessert wird. Das elektrisch isolierende Material ist überdies vorteilhaft robust, insbesondere wenn es sich um einen Kunststoff handelt, so dass die Gefahr von Beschädigungen des Kondensatoraufbaus bei der Montage minimiert wird.

Besonders vorteilhaft kann vorgesehen werden, dass aus dem elektrisch isolierenden Material mindestens eine Aufnahme für die Baustruktur ausgebildet ist. Hierdurch kann die Montage von als einzelne Komponenten ausgebildeten Baustrukturen vorteilhaft erleichtert werden, was Montageaufwand einspart. Außerdem sind die in die Aufnahme integrierten Baustrukturen vorteilhaft gut fixiert, wodurch nicht zuletzt die Zuverlässigkeit des gesamten Kondensatoraufbaus verbessert wird. Die Aufnahme kann überdies vorteilhaft als Schutz für die aufgenommene Baustruktur dienen, was sich sowohl bei der Montage als auch beim Betrieb des Kondensatoraufbaus positiv auswirkt.

Die oben angegebene Aufgabe wird außerdem mit dem eingangs angegebenen Leistungsmodul erfindungsgemäß dadurch gelöst, dass ein Kondensatoraufbau der vorstehend beschriebenen Art mit dem leistungselektronischen Bauelement elektrisch kontaktiert ist. Wie bereits beschrieben, ist es bei vielen leistungselektronischen Aufbauten erforderlich, dass leistungselektronische Bauelemente mit Kondensatoren kombiniert werden (hierzu im Folgenden mehr). Daher eignet sich der Kondensatoraufbau vorteilhaft zur Herstellung eines Leistungsmoduls mit verringertem Montageaufwand für das Leistungsmodul, da der Kondensatoraufbau bereits vormontiert werden kann.

Die leistungselektronischen Bauelemente sind vorzugsweise als Nacktchip ausgeführt. Dieser lässt sich direkt mit der Substratplatte kontaktieren, beispielsweise durch eine Sinterverbindung, die auch einen elektrischen Kontakt gewährleistet. Die Substratplatte kann vorzugsweise aus einer Keramik hergestellt sein. Diese leitet den elektrischen Strom nicht, so dass gleichzeitig eine elektrische Isolation gewährleistet ist. Daher kann eine elektronische Schaltung durch Strukturieren einer elektrisch leitenden Beschichtung auf der Substratplatte realisiert werden. Hierdurch werden beispielsweise Kontaktflächen zur Kontaktierung der leistungselektronischen Bauelemente zur Verfügung gestellt.

Die erfindungsgemäße Ausbildung der Leistungsmodule hat den Vorteil, dass diese mit vergleichsweise geringem Aufwand bei der Konzipierung und bei der Montage auf dem Basisschaltungsträger zu verschiedenen Konfigurationen kombiniert werden können, um leistungselektronische Schaltungen mit unterschiedlichen Anforderungen zu realisieren. Der Basisschaltungsträger kann dabei beispielsweise als Leiterplatte ausgebildet sein, wobei eine Schaltung auf der Oberfläche zur Kontaktierung mit den verwendeten Leistungsmodulen vorgesehen sein kann. Der Basisschaltungsträger kann beispielsweise aber auch aus einem Gehäuseteil oder dergleichen bestehen, wobei das Gehäuse dann gleichzeitig als Tragkörper zur Ausbildung der leistungselektronischen Schaltung dient.

Weiterhin kann gemäß einer vorteilhaften Ausgestaltung der Erfindung vorgesehen werden, dass das leistungselektronische Bauelement auf der einen Seite der Substratplatte montiert ist und der Kondensatoraufbau auf der anderen Seite der Substratplatte montiert ist. Verbindungen zwischen dem leistungselektronischen Bauelement und dem Kondensatoraufbau können beispielsweise mittels einer Durchkontaktierung in der Substratplatte erzeugt werden. Die Substratplatte ermöglicht weiterhin eine einfache Montage des Leistungsmoduls in einer größeren leistungselektronischen Schaltung, wodurch Fertigungsaufwand eingespart werden kann. Beispielsweise ist es möglich, die Substratplatte, die mit dem mindestens einen leistungselektronischen Bauelement bestückt ist, auf einem Basisschaltungsträger zu montieren. Dabei können Verfahren der Oberflächenmontage zum Einsatz kommen. Handelt es sich bei dem leistungselektronischen Bauelement um einen Leistungschip, kann dieser mit der der Substratplatte abgewandten Seite direkt mit dem besagten Basisschaltungsträger kontaktiert werden.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Es zeigen:
- Figur 1: ein Ausführungsbeispiel des erfindungsgemäßen Leistungsmoduls mit einem Ausführungsbeispiel des erfindungsgemäßen Kondensatoraufbaus in dreidimensionaler Ansicht, teilweise geschnitten,
- Figur 2: das Detail II gemäß Figur 1, teilweise aufgeschnitten,
- Figur 3: eine leistungselektronische Schaltung mit einer Vielzahl von Leistungsmodulen, die gemäß Figur 1 oder ähnlich aufgebaut sein können, als Aufsicht,
- Figur 4: schematisch einen Schaltplan für eine Kontaktierung von Leistungsmodulen gemäß Figur 1 in einer leistungselektronischen Schaltung gemäß Figur 3,
- Figur 5: ein anderes Ausführungsbeispiel für einen erfindungsgemäßen Kondensatoraufbau in dreidimensionaler Darstellung, teilweise aufgeschnitten, und
- Figur 6: ein letztes Ausführungsbeispiel eines erfindungsgemäßen Leistungsmoduls mit einem Ausführungsbeispiel des erfindungsgemäßen Kondensatoraufbaus als Seitenansicht, teilweise aufgeschnitten.

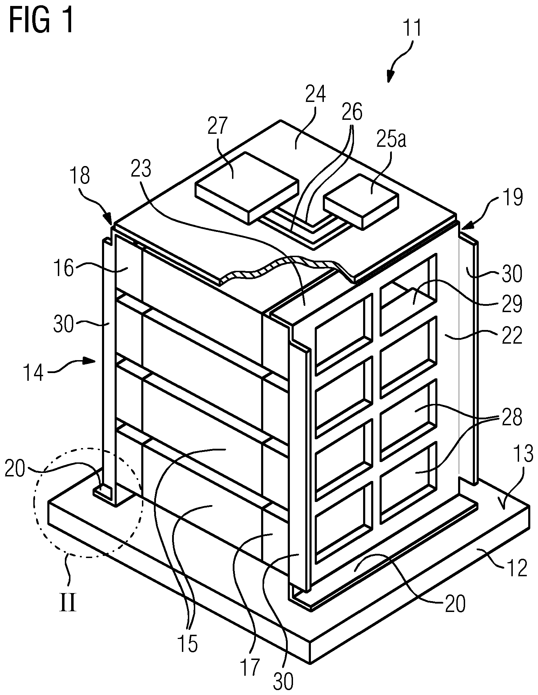

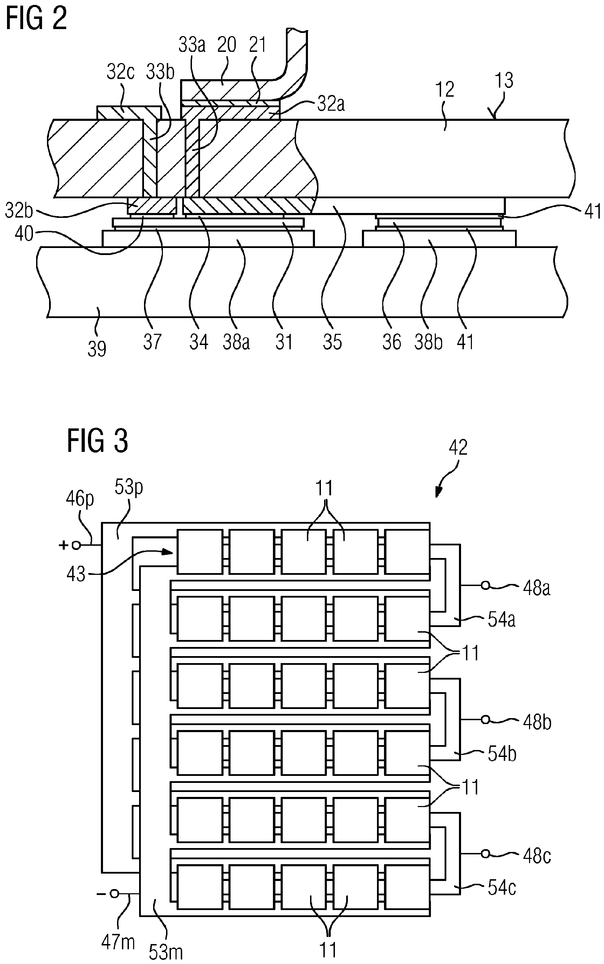

Ein Leistungsmodul 11 gemäß Figur 1 weist eine Substratplatte 12 auf, auf deren sichtbarer Oberseite 13 ein Kondensatoraufbau 14 nach einem Verfahren der Oberflächenmontage montiert wurde. Der Kondensatoraufbau weist acht Kondensatoren 15 auf, von denen in Figur 1 jedoch nur sieben dargestellt sind (der rechts oben angeordnete Kondensator fehlt; hierzu im Folgenden noch mehr). Die Kondensatoren 15 weisen jeweils erste Kondensatorelektroden 16 und zweite Kondensatorelektroden 17 auf, wobei die ersten Kondensatorelektroden 16 mit einer ersten Elektrode 18 und die zweiten Kondensatorelektroden 17 mit einer zweiten Elektrode 19 durch nicht näher dargestellte Blödverbindungen oder anderen stoff- oder formschlüssige Verbindungen elektrisch kontaktiert sind. Die erste Elektrode 18 und die zweite Elektrode 19 weisen überdies je eine Kontaktstruktur 20 auf, die mit ihren unteren Seiten an der ersten Elektrode eine erste Anschlussfläche und an der zweiten Elektrode eine zweite Anschlussfläche bilden (in Figur 1 nicht zu erkennen, da der Oberseite 13 zugewandt). Mit der ersten Anschlussfläche und der zweiten Anschlussfläche, die gemeinsam die Montageseite des Kondesatoraufbaus 14 ausbilden, ist dieser auf die Oberseite der Substratplatte 12 mittels einer nicht näher dargestellten Lötverbindung 21 (vgl. Figur 2) montiert.

Die erste Elektrode 18 und die zweite Elektrode 19 bilden gemeinsam eine Haltestruktur für die Kondensatoren 15 aus. Da die Kondensatoren 15 mit ihren ersten Kontaktelektroden 16 und ihren zweiten Kontaktelektroden 17 mit Seitenwänden 22 der ersten Elektrode 18 und zweiten Elektrode 19 verlötet sind, entsteht der selbsttragende Kondensatoraufbau 14, obwohl die erste Elektrode 18 und die zweite Elektrode 18 nicht direkt miteinander verbunden sind. Zusätzliche Stabilität erlangt der Kondensatoraufbau 11 durch Montage auf der Substratplatte 12. Außerdem ist auf Aufnahmestrukturen 23 der ersten Elektrode 18 und der zweiten Elektrode 19 ein Schaltungsträger 24 als zusätzliche Baustruktur befestigt, wobei der Schaltungsträger 24 eine Verbindung zwischen der ersten Elektrode 18 und der zweiten Elektrode 19 herstellt und damit die Haltestruktur stabilisiert.

In der Seitenwand 22 der ersten Elektrode 18 (nicht zu erkennen in Figur 1) und der zweiten Elektrode 19 sind Fenster 28 eingestanzt. Diese eröffnen die Möglichkeit, Zungen 29 in den Innenraum der Haltestruktur hinein zu biegen, die eine Positionierung der Kondensatoren 15 erleichtern und überdies die elektrische Kontaktfläche vergrößern. Da der rechts oben befindliche Kondensator hinter der Seitenwand 22 weggelassen wurde, kann die Zunge 29 dort dargestellt werden. In den anderen Fenstern sind die Zungen von den zweiten Kondensatorelektroden 17 verdeckt.

Auf dem Schaltungsträger 24 ist ein Sensorelement 25a befestigt, wobei es sich beispielsweise um einen Temperatursensor oder einen Beschleunigungssensor (oder Feuchtesensor oder Gassensor) handelt. Über Leiterbahnen 26 auf dem Schaltungsträger 24 ist das Sensorelement 25a mit einer Auswertungsschaltung in Form eines integrierten Schaltkreises 27 verbunden. Der integrierte Schaltkreis 27 kann das Sensorsignal auswerten und in nicht näher dargestellter Weise für eine Weiterverarbeitung zur Verfügung stellen (beispielsweise über nicht dargestellte Leitungsverbindungen oder eine schnurlose Schnittstelle, also über Funk oder Infrarot).

Als weitere Baustruktur sind an den Seitenkanten der Seitenwand 22 Rippen 30 als Versteifungsstruktur hergestellt. Diese können durch Umbiegen der Seitenkanten der Seitenwände 22 erzeugt werden. Die erste Elektrode 18 und die zweite Elektrode 19 können somit kostengünstig als Leadframe durch Stanzen und anschließendes Biegen erzeugt werden. Durch Biegen können auch jeweils die Aufnahmestrukturen 23 und die Kontaktstrukturen 20 hergestellt werden.

In Figur 2 ist dargestellt, wie eine Kontaktierung der Kondensatoranordnung 14 gemäß Figur 1 mit einem als Transistor ausgeführten leistungselektronischen Bauelement 31 erfolgen kann. Zu diesem Zweck ist die Kontaktstruktur 20 über die Lötverbindung 21 mit einem Kontaktpad 32a kontaktiert, wobei das Kontaktpad 32a über eine Durchkontaktierung 33a mit einer Sourceelektrode 34 des leistungselektronischen Bauelements 31 kontaktiert ist. Die Sourceelektrode 34 ist außerdem über eine Leiterbahn 35 mit einem Distanzstück 36 verbunden, welches dieselbe Höhe wie das leistungselektronische Bauelement 31 aufweist.

Eine Drainelektrode 37 des leistungselektronischen Bauelements 31 ist über eine Kontaktfläche 38a und das Distanzstück 36 ist über eine Kontaktfläche 38b mit einem Basisschaltungsträger 39 verbunden. Der Basisschaltungsträger 39 stellt eine Grundplatte zur Verfügung, auf der die ganze elektronische Schaltung, bestehend aus mehreren Leistungsmodulen gemäß Figur 1, montiert ist (vgl. auch Figur 3).

Bei dem leistungselektronischen Bauelement gemäß Figur 2 handelt es sich um einen Transistor. Damit dieser geschaltet werden kann, ist weiterhin eine Gateelektrode 40 notwendig. Damit diese angesteuert werden kann, ist in der Substratplatte 12 eine Durchkontaktierung 33b vorgesehen, die von einem Kontaktpad 32b zu einem Kontaktpad 32c führt. Sourceelektrode 34, Gateelektrode 40, Drainelektrode 37 sowie Fügeschichten 41 am Distanzstück 36 sind als Sinterverbindungen ausgebildet.

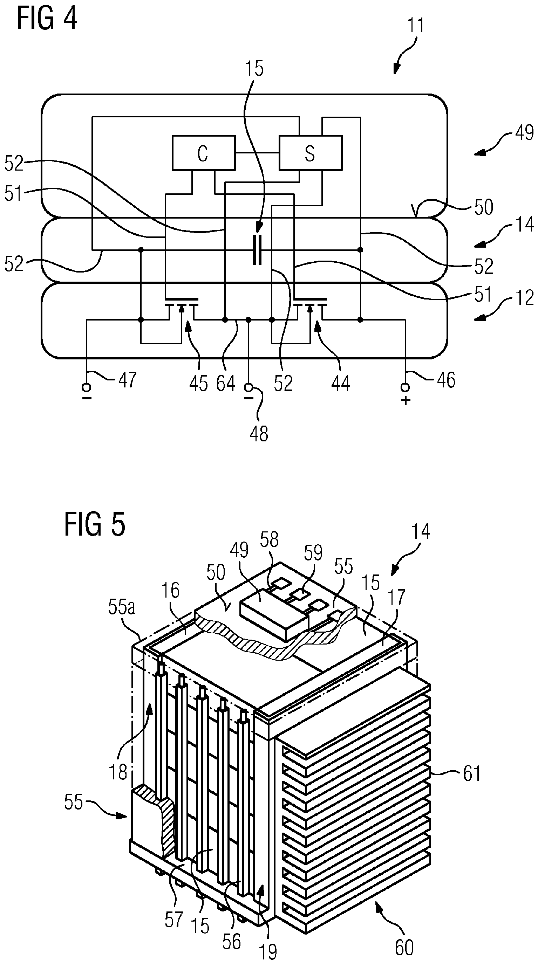

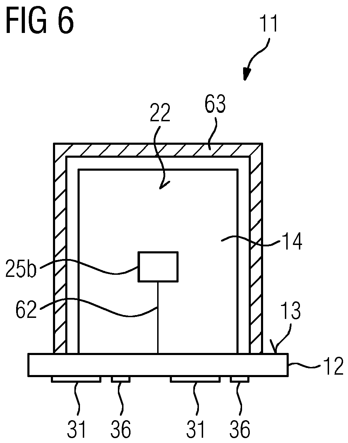

In Figur 3 ist dargestellt, wie mehrere Leistungsmodule 11 auf einem Basisschaltungsträger 39 gemäß Figur 2 zu einer leistungselektronischen Schaltung 42 kombiniert werden können. Fünf Leistungsmodule 11 sind jeweils zu einer Reihe 43 konfiguriert, wobei insgesamt sechs Reihen vorgesehen sind. Wie Figur 2 zu entnehmen ist, ist von der Substratplatte 12 nur die linke Seite dargestellt, wobei die rechte Seite ein weiteres leistungelektronisches Bauelement 31 aufweist (wie in Figur 6 dargestellt). Dies bedeutet, dass auf der nicht dargestellten Seite der Substratplatte gemäß Figur 2 ebenfalls ein Transistor als leistungselektronisches Bauelement verbaut ist. Hieraus ergibt sich eine Kontaktierungsmöglichkeit, die in Figur 3 für jedes Leistungsmodul 11 realisiert ist und in Figur 4 schematisch als Schaltbild dargestellt ist.

In Figur 4 ist der Kondensator 15 als Ersatz für den gesamten Kondensatoraufbau gemäß Figur 1 dargestellt. Dies dient der Vereinfachung der Darstellung, wobei alternativ auch eine Vielzahl parallel geschalteter Kondensatoren zum Einsatz kommen kann. Der Kondensator 15 gemäß Figur 4 wie auch der Kondensatoraufbau 14 ist lediglich schematisch dargestellt. Genauso verhält es sich mit der Substratplatte 12 und den darauf montierten leistungselektronischen Bauelementen, die durch einen ersten Transistor 44 und einen zweiten Transistor 45 ausgebildet sind. Der erste Transistor 44 ist mit seiner Source-Elektrode an den auch als High-Side bezeichneten Pluspol 46 angeschlossen, während der zweite Transistor 45 mit seiner Drain-Elektrode an den auch als Low-Side bezeichneten Minuspol 47 angeschlossen ist. Die Drain-Elektrode des ersten Transistors 44 ist mit der Source-Elektrode des zweiten Transistors 45 sind miteinander verbunden, wobei hierdurch eine Halbbrücke 64 mit einem Phasenkontakt 48 entsteht.

Zur Ansteuerung des Leistungsmoduls 11 ist der Kondensatoraufbau 14 mit einer Treiberschaltung 49 versehen, die gemäß Figur 5 beispielsweise auf einer Oberseite 50 des Kondensatoraufbaus 14 untergebracht sein kann.

Die Treiberschaltung gemäß Figur 4 ist nur schematisch dargestellt, um deren Funktion im Grundsatz zu beschreiben. Die Treiberschaltung weist eine Controllerfunktion C auf sowie eine Sensorfunktion S. Die Controllerfunktion wird durch Kontaktleitungen 51 als Schnittstelle zu den Gate-Elektroden des ersten Transistors 44 und des zweiten Transistors 45 gewährleistet. Damit kann die Treiberschaltung beide Transistoren als Schalter intelligenter ansteuern. Die für diese Funktion notwendigen Informationen werden durch die Sensorfunktion S zur Verfügung gestellt. Die Sensorfunktion wird über Signalleitungen 52 gewährleistet, mit denen ein Stromfluss vor und hinter dem Kondensator 15 sowie vor und hinter dem Phasenkontakt 48 in der Halbbrücke 64 abgegriffen werden kann.

Der Kondensator 15 ist mit dem Pluspol 46 und dem Minuspol 47 verbunden und erfüllt damit eine Glättungsfunktion, die für einen mehrphasigen Betrieb der leistungselektronischen Schaltung 42 gemäß Figur 3 erforderlich ist.

Wie in Figur 3 zu erkennen ist, ist die leistungselektronische Schaltung 42 gemäß Figur 3 modular aufgebaut. Mittels der durch die Leistungsmodule 11 gemäß Figur 4 realisierten Schaltung können diese in drei Gruppen jeweils gemeinsam verwendet werden, um aus einer am gemeinsamen Pluspol 46p und am gemeinsamen Minuspol 47m anliegenden Gleichspannung eine dreiphasige Wechselspannung zu erzeugen, die an den gemeinsamen Phasenkontakten 48a, 48b, 48c abgegriffen werden kann. Die Höhe des zu schaltenden maximalen Stroms bestimmt, wie viele der Leistungsmodule 11 pro Phase zum Einsatz kommen müssen. Gemäß Figur 3 handelt es sich um jeweils zehn Leistungsmodule 11 pro Phase.

Wie zu erkennen ist, sind die Elektroden 53m, 53p des Pluspols 46p und des Minuspols 47m kammartig ausgebildet, so dass jeweils durch die den Pluspol 46p bildende Elektrode 53p jeder erste Transistor 44 jedes Leistungsmoduls 11 und mit der den Minuspol 53m Elektrode 53m jeder zweite Transistor 45 jedes Leistungsmoduls 11 kontaktiert werden kann. Die Phasenkontakte 48a, 48b, 48c sind jeweils mit U-förmigen Elektroden 54a, 54b, 54c verbunden, welche jeweils im mittleren Bereich der Leistungsmodule 11 sowohl den ersten Kondensator 44 als auch den zweiten Kondensator 45 kontaktieren und auf diese Weise jeweils eine der drei Gruppen von je zehn Leistungsmodulen 11 über eine Halbbrücke (64 in Figur 4) kontaktieren. Damit ist für jedes der Leistungsmodule 11 eine Schaltung gemäß Figur 4 realisiert, wobei jede Gruppe von Leistungsmodulen 11 parallel geschaltet ist.

Bei der Kondensatoranordnung 14 gemäß Figur 5 kommen eine erste Elektrode 18 und die zweite Elektrode 19 zum Einsatz, um die Kondensatoren 15 in der zu Figur 1 beschriebenen Weise zu kontaktieren. Gemäß Figur 5 sind fünf Kondensatoren 15 übereinander und je zwei Kondensatoren nebeneinander angeordnet. Der Kondensatoraufbau 14 weist anders als in Figur 1 ein elektrisch isolierendes Material 55 auf. Dieses besteht gemäß Figur 5 aus Kunststoff, wobei die erste Elektrode 18 und die zweite Elektrode 19 derart in das Material 55 eingespritzt ist, dass eine Kontaktierung mit den Kondensatoren 15 erfolgen kann (sog. Montagespritzgießen).

Das Material 55 ist in Figur 5 nur ausschnittweise dargestellt. Die durch das Material 55 gebildete Gehäusestruktur ist weitgehend aufgebrochen, wobei lediglich die Konturen 55a, die durch das Material 55 gebildet sind, mit Strichpunktlinien angedeutet sind. Daher können die im Inneren des Materials angedeuteten Strukturen in Figur 5 erkannt werden. Dazu zählen neben der ersten Elektrode 18 und der zweiten Elektrode 19 sowie den Kondensatoren 15 auch elektrische Leitpfade 56, die durch metallische Leiter gebildet sind und die Oberseite 50 elektrisch mit der Montageseite der Kondensatoranordnung 14 verbinden. Die Leitpfade bilden auf der Montageseite Kontaktstrukturen 57 aus, die auf einer Substratplatte (vgl. 12 in Figur 1) kontaktiert werden können, wenn auf dieser entsprechende Kontaktpads vorhanden sind.

Auf der Oberseite 50 kann die Treiberschaltung 49 gemäß Figur 4 angeordnet werden. Damit diese die auf der Substratplatte gemäß Figur 2 angeordneten leistungselektronischen Bauelemente 31 ansteuern kann, können die Leitpfade 56 genutzt werden. Auf der Oberseite 15 sind zu diesem Zweck Leiterbahnen 58 und Kontaktpads 59 vorgesehen, wobei die Kontaktpads 59 mit den Leitpfaden 56 in elektrischer Verbindung stehen.

Die durch die Elektrode 19 gebildete Seitenwand wird zusätzlich zur Unterbringung einer Kühlstruktur 60 als Baustruktur verwendet, wobei die Kühlstruktur 60 aus einem passiven Aluminiumkühler mit Rippen 61 besteht. Alternativ (nicht dargestellt) könnte auch ein aktiver Kühler mit einem Kühlkanal verwendet werden, der einen Zulauf und einen Ablauf für ein vorzugsweise flüssiges Kühlmedium aufweist.

In Figur 6 ist ein weiteres Leistungsmodul 11 dargestellt. Dieses ist in bereits beschriebener Weise auf der Substratplatte 12 montiert, wobei diese leistungselektronische Bauelemente 31 und Distanzstücke 36 aufweist (Anordnung wie in Figur 2). Der Kondensatoraufbau 14 ist lediglich schematisch dargestellt und kann wie in Figur 5 dargestellt aufgebaut sein. Auf der Seitenwand 22 ist ein Sensorelement 25b befestigt, wobei es sich hierbei beispielsweise um einen Temperatursensor oder einen Feuchtigkeitssensor oder einen Beschleunigungssensor handeln kann. Im Ausführungsbeispiel gemäß Figur 6 kann das Sensorsignal über eine Signalleitung 62 einer nicht näher dargestellten Treiberschaltung auf der Substratplatte 12 zugeführt werden.

Als weitere Baustruktur weist das Leistungsmodul 11 gemäß Figur 6 eine Schirmstruktur 63 auf, welche beispielsweise aus einem Metallgitter bestehen kann. Hierdurch ist eine elektromagnetische Abschirmung des Leistungsmoduls möglich, um einen störungsfreien Betrieb zu gewährleisten.

## Patentansprüche

1. Kondensatoraufbau mit mehreren in einer Haltestruktur (18, 19, 55) angeordneten Kondensatoren (15), wobei die Kondensatoren (15) je eine erste Kondensatorelektrode (16) und eine zweite Kondensatorelektrode (17) aufweisen, wobei
• die Haltestruktur (18, 19, 55) eine erste Elektrode (18) und eine zweite Elektrode (19) aufweist,
• die Kondensatoren (15) über ihre ersten Kondensatorelektroden (16) mit der ersten Elektrode (18) und über ihre zweiten Kondensatorelektroden (17) mit der zweiten Elektrode (19) elektrisch kontaktiert sind,
• die Haltestruktur (18, 19, 55) eine Montageseite für eine Oberflächenmontage aufweist und die Montageseite mit einer ersten Anschlussfläche der ersten Elektrode (18) und mit einer zweiten Anschlussfläche der zweiten Elektrode (19) zur elektrischen Kontaktierung der Haltestruktur ausgestattet ist,
**dadurch gekennzeichnet,**
**dass**
• Die Haltestruktur (18, 19, 55) einen quaderförmigen Innenraum einschließt, in dem die Kondensatoren (15) angeordnet sind,
• an einer außerhalb der Montageseite liegenden Außenseite der Haltestruktur (18, 19, 55) eine zusätzliche Baustruktur (24, 25a, 25b, 30, 49, 56, 60, 63) vorgesehen ist.

2. Kondensatoraufbau nach Anspruch 1,
**dadurch gekennzeichnet,**
**dass** die erste Elektrode (18) und die zweite Elektrode (19) gegenüberliegende Seitenwände (22) des Innenraums der Haltestruktur (18, 19, 55) bilden, wobei
• die Seitenwände (22) sich jeweils senkrecht von der ersten Anschlussfläche und von der zweiten Anschlussfläche weg erstrecken,
• zwischen den Seitenwänden (22) die Kondensatoren (15) angeordnet sind.

3. Kondensatoraufbau nach einem der voranstehenden Ansprüche,
**dadurch gekennzeichnet,**
**dass** die Baustruktur eine Versteifungsstruktur, insbesondere Rippen (30), aufweist.

4. Kondensatoraufbau nach einem der voranstehenden Ansprüche,
**dadurch gekennzeichnet,**
**dass** die Baustruktur elektrische Leitpfade (56) aufweist, die von der Montageseite zu einer Oberseite (50) des Kondensatoraufbaus verlaufen.

5. Kondensatoraufbau nach einem der voranstehenden Ansprüche,
**dadurch gekennzeichnet,**
**dass** die Baustruktur eine Kühlstruktur (60) aufweist.

6. Kondensatoraufbau nach einem der voranstehenden Ansprüche,
**dadurch gekennzeichnet,**
**dass** die Baustruktur mindestens einen Sensorelement (25), insbesondere einen Temperatursensor und/oder einen Feuchtigkeitssensor und/oder einen Stromsensor und/oder einen Beschleunigungssensor aufweist.

7. Kondensatoraufbau nach einem der voranstehenden Ansprüche,
**dadurch gekennzeichnet,**
**dass** die Baustruktur einen Schaltungsträger (24) aufweist.

8. Kondensatoraufbau nach Anspruch 7,
**dadurch gekennzeichnet,**
**dass** auf dem Schaltungsträger (24) eine Treiberschaltung (49) für mindestens ein leistungselektronisches Bauelement (31) ausgebildet ist.

9. Kondensatoraufbau nach einem der voranstehenden Ansprüche,
**dadurch gekennzeichnet,**
**dass** die Baustruktur eine elektrische Schirmstruktur (63) aufweist, die den Kondensatoraufbau zumindest teilweise ummantelt.

10. Kondensatoraufbau nach einem der voranstehenden Ansprüche,
**dadurch gekennzeichnet,**
**dass** der Innenraum der Haltestruktur (18, 19, 55) gekapselt ist.

11. Kondensatoraufbau nach einem der voranstehenden Ansprüche,
**dadurch gekennzeichnet,**
**dass** die Haltestruktur (18, 19, 55) ein elektrisch isolierendes Material (55) aufweist, in das die erste Elektrode (18) und die zweite Elektrode (19) intergiriert sind.

12. Kondensatoraufbau nach Anspruch 13,
**dadurch gekennzeichnet,**
**dass** aus dem elektrisch isolierenden Material (55) mindestens eine Aufnahme für die Baustruktur (24, 25a, 25b, 30, 49, 56, 60, 63) ausgebildet ist.

13. Leistungsmodul mit einem leistungselektronischen Bauelement (31), welches auf einer Substratplatte (12) montiert ist,
**dadurch gekennzeichnet,**
**dass** ein Kondensatoraufbau nach einem der voranstehenden Ansprüche mit dem leistungselektronischen Bauelement (31) elektrisch kontaktiert ist.

14. Leistungsmodul nach Anspruch 13,
**dadurch gekennzeichnet,**
**dass** das leistungselektronische Bauelement (31) auf der einen Seite der Substratplatte (12) montiert ist und der Kondensatoraufbau auf der anderen Seite der Substratplatte (12) montiert ist.
